(19) Europäisches Patentamt
European Patent Office
Office européen des brevets

(11) **EP 0 659 686 B1**

(12) **FASCICULE DE BREVET EUROPEEN**

(45) Date de publication et mention de la délivrance du brevet:
**10.06.1998 Bulletin 1998/24**

(51) Int. Cl.$^6$: **C01D 3/14**, C01B 7/14

(21) Numéro de dépôt: **94203514.8**

(22) Date de dépôt: **05.12.1994**

(54) **Procédé et installation pour l'épuration d'une solution aqueuse de chlorure de métal alcalin**

Verfahren und Vorrichtung zur Reinigung einer wässrigen Alkalimetallchloridlösung

Process and installation for the purification of an aqueous solution of an alkali metal chloride

(84) Etats contractants désignés:
**AT BE CH DE DK ES FR GB IT LI NL SE**

(30) Priorité: **17.12.1993 IT MI932655**

(43) Date de publication de la demande:
**28.06.1995 Bulletin 1995/26**

(73) Titulaire:
**SOLVAY (Société Anonyme)**
**B-1050 Bruxelles (BE)**

(72) Inventeurs:
• **Pastacaldi, Alessandra**
**I-57013 Rosignano-Solvay/Livorno (IT)**
• **Arrighi, Roberto**
**I-57013 Rosignano-Solvay/Livorno (IT)**

(74) Mandataire: **Anthoine, Paul et al**
**SOLVAY**
**Département de la Propriété Industrielle**
**310, rue de Ransbeek**
**1120 Bruxelles (BE)**

(56) Documents cités:
**EP-A- 0 399 588**

• **PATENT ABSTRACTS OF JAPAN vol. 11, no. 307 (C-450) 7 Octobre 1987 & JP-A-62 096 685 (TOYO SODA MFG CO LTD) 23 Octobre 1985**
• **DATABASE WPI Week 7648, Derwent Publications Ltd., London, GB; AN 76-89540X/48 & JP-A-51 116 196 (TEIKOKU OIL KK) 14 Octobre 1976**
• **CHEMICAL ABSTRACTS, vol. 85, no. 8, 23 Août 1976, Columbus, Ohio, US; abstract no. 53759, 'Halogen isolation from brine'; & JP-A-50 095 194 (UNITED RESOURCES INDUSTRY CO. LTD.) 29 Juillet 1975**

## Description

L'invention a pour objet l'épuration des solutions aqueuses de chlorure de métaux alcalins, telles que les saumures de chlorure de sodium.

Elle concerne plus particulièrement un procédé d'épuration d'une solution aqueuse de chlorure de métal alcalin en composés iodés.

Les solutions aqueuses de chlorure de sodium obtenues à partir d'eau de mer ou par dissolution de sel gemme dans de l'eau contiennent diverses impuretés, parmi lesquelles figurent notamment du calcium, du magnésium, du fer, ainsi que des composés ammoniacaux (ammoniaque, chlorure d'ammonium), des composés iodés (iodures métalliques) et des composés bromés (bromures métalliques). Ces impuretés sont nocives, lorsque les solutions de chlorure de sodium sont traitées dans des cellules d'électrolyse pour produire du chlore et de l'hydroxyde de sodium. En particulier, la présence d'ions iodure dans les solutions aqueuses de chlorure de sodium s'est révélée être une cause d'une perte de rendement des cellules d'électrolyse à membranes échangeuses de cations utilisées pour la production de chlore et de solutions aqueuses d'hydroxyde de sodium.

Dans la demande de brevet EP-A-0399588 [SOLVAY (Société Anonyme)], on décrit un procédé d'épuration de saumures en ions iodure, selon lequel on oxyde les ions iodure en iode moléculaire au moyen de chlore actif et l'iode ainsi formé est ensuite éliminé de la saumure sur une résine échangeuse d'anions, basique, halogénée. Dans ce procédé connu, le chlore actif est apporté sous la forme d'un courant de chlore ou d'hypochlorite de métal alcalin.

Dans le procédé connu qui vient d'être décrit, le traitement de la saumure avec le chlore actif nécessite une grande vigilance pour éviter une oxydation excessive des ions iodure, qui conduirait à la formation d'anions iodate $IO_3^-$. Cette condition est imposée du fait que les anions iodate ne sont généralement pas adsorbés sur la résine utilisée dans le procédé.

L'invention vise à fournir un procédé perfectionné qui facilite le contrôle de l'oxydation des ions iodure et réduit, par voie de conséquence, le risque d'une formation intempestive d'anions iodate.

L'invention concerne dès lors un procédé d'épuration d'une solution aqueuse de chlorure de métal alcalin contenant des ions iodure, selon lequel on oxyde les ions iodure en iode au moyen de chlore actif et on élimine l'iode sur une résine échangeuse d'anions, basique, halogénée, le procédé se caractérisant en ce qu'on électrolyse la solution pour y générer le chlore actif in situ, dans une cellule d'électrolyse ne comprenant ni diaphragme ni membrane.

Dans le procédé selon l'invention, les ions iodure de la solution aqueuse sont généralement à l'état d'iodures métalliques, notamment d'iodure de métal alcalin. Ils sont naturellement présents dans l'eau de mer ou le sel gemme, lorsque la solution aqueuse de chlorure de métal alcalin est une solution aqueuse de chlorure de sodium.

Le traitement de la solution avec le chlore actif a pour fonction d'oxyder les ions iodure en iode moléculaire. Conformément à l'invention, le chlore actif est généré in situ dans la solution aqueuse de chlorure de métal alcalin, en soumettant celle-ci à une électrolyse. L'électrolyse des solutions aqueuses d'halogénure de métal alcalin (en particulier de chlorure de sodium) est bien connue en technique. Dans le procédé selon l'invention, elle est réalisée dans une cellule sans diaphragme, comprenant une anode et une cathode métalliques reliées respectivement aux bornes positive et négative d'une source de courant continu. Pendant l'électrolyse, du chlore naissant est généré au sein de la solution aqueuse de chlorure de métal alcalin et réagit immédiatement avec les ions iodure de la solution.

Dans une forme de réalisation préférée du procédé selon l'invention, on règle l'électrolyse de manière à réaliser dans la solution, un potentiel sensiblement égal au potentiel d'oxydo-réduction de la réaction d'oxydation des ions iodure en iode moléculaire par le chlore actif

$$I^- + Cl° \rightarrow I° + Cl^-$$

A cet effet, on sélectionne avantageusement un potentiel de 500 à 700 mV, de préférence de 550 à 600 mV. Le potentiel sélectionné peut être obtenu en imposant une valeur prédéterminée du courant d'électrolyse. Cette forme de réalisation préférée de l'invention réduit à une valeur négligeable le risque d'une formation intempestive d'anions iodate dans la solution.

A l'issue de l'électrolyse, la solution aqueuse est mise en contact avec la résine échangeuse d'anions, de manière que l'iode soit adsorbé sur la résine. La résine échangeuse d'anions est une résine basique comprenant des sites cationiques fixes et des sites anioniques interchangeables, occupés par des anions halogène tels que $Br^-$, $Cl^-$ et $I^-$. Des résines échangeuses d'anions utilisables dans le procédé selon l'invention sont celles dans lesquelles les sites cationiques fixes sont des groupes ammonium quaternaire fixés sur des polymères à longue chaine tels que des copolymères du styrène et du divinylbenzène. Des résines de ce type sont décrites dans le brevet US-A-2900352. Des résines qui conviennent bien sont les résines LEWATIT® (BAYER) et les résines AMBERLITE® (ROHM & HAAS CO). La résine se présente généralement à l'état de granules, au contact desquels on fait circuler la solution. La résine utilisée dans le procédé selon l'invention doit avoir ses sites interchangeables occupés par des anions halogène. Les anions chlorure et iodure sont préférés. L'adsorption de l'iode libre de la solution sur la résine se fait avec formation de complexes polyhalogénés, vraisemblablement selon le processus réactionnel suivant :

$$I_2 + Cl^- \rightarrow (I_2Cl)^-$$

...

$$R^+X^- + (I_2Cl)^- \rightarrow R^+ (I_2Cl)^- + X^-$$

où :

$I_2$    représente l'iode moléculaire de la solution aqueuse,

$R^+$    représente un site cationique fixe de la résine,

$X^-$    représente un ion halogénure occupant un site anionique interchangeable de la résine (par exemple un ion $I^-$ ou $Cl^-$).

La résine doit être régénérée périodiquement, lorsque ses sites sont saturés par les anions $(I_2Cl)^-$. La régénération peut être obtenue en lavant la résine avec une solution d'un sel de métal alcalin (par exemple de sodium) dans des conditions réglées pour décomposer l'ion complexe $(I_2Cl)^-$ en libérant de l'iode moléculaire. L'iode libéré peut être récupéré de la solution de lavage de manière connue en soi.

Dans le procédé selon l'invention, le pH de la solution constitue un paramètre important pour le rendement de l'épuration. A cet effet, dans une forme d'exécution particulière du procédé selon l'invention, on exécute l'électrolyse et le traitement sur la résine à pH acide, de préférence inférieur à 3. A cet effet, selon l'invention, avant d'électrolyser la solution, on l'acidifie à pH inférieur à 3, de préférence à pH de 1,5 à 2.

Le procédé selon l'invention est de préférence appliqué à des solutions aqueuses qui ont été au préalable épurées en calcium et en magnésium. A cet effet, l'électrolyse peut être précédée d'un traitement de la solution avec du carbonate de sodium et de l'hydroxyde de sodium, comme il est bien connu en technique (J. S. SCONCE - Chlorine, Its manufacture, Properties and Uses - Reinhold Publishing Corporation - 1962 - Pages 135 et 136).

Dans une variante du procédé selon l'invention, le traitement sur la résine est suivi d'un traitement d'épuration de la solution en composés ammoniacaux et en composés bromés, au moyen des techniques exposées dans le document EP-A-0399588.

L'invention concerne également une installation pour épurer une solution aqueuse de métal alcalin en appliquant le procédé selon l'invention, ladite installation comprenant, d'une part, une chambre de réaction comprenant une cellule d'électrolyse et, d'autre part, une enceinte contenant une résine échangeuse d'anions, basique, halogénée.

La cellule d'électrolyse présente dans l'installation selon l'invention a pour fonction de réaliser une électrolyse de la solution aqueuse de chlorure de métal alcalin en sorte d'y générer du chlore. Des cellules d'électrolyse de ce type sont bien connues en technique. La cellule utilisée est du type sans diaphragme et comprend une anode et une cathode dans une chambre destinée à être traversée par la solution aqueuse de chlorure de métal alcalin.

Dans la cellule d'électrolyse l'anode et la cathode doivent être réalisées en des matériaux conducteurs de l'électricité, chimiquement inertes vis-à-vis des solutions aqueuses de chlorure de métal alcalin et présentant une faible surtension à l'oxydation des ions chlorure (dans le cas de l'anode) et à la réduction des protons (dans le cas de la cathode). On utilise avantageusement une cathode en nickel et, pour l'anode, une plaque en titane portant un revêtement d'oxyde d'un métal du groupe du platine (par exemple d'oxyde de ruthénium), éventuellement associé à de l'oxyde de titane.

Dans l'installation selon l'invention, la cellule d'électrolyse est du type sans diaphragme et comprend de préférence une chambre cathodique verticale et une chambre anodique horizontale, l'anode et la cathode étant ajourées. Dans cette forme de réalisation de l'installation selon l'invention, on réduit le risque que du chlore généré à l'anode réagisse avec de l'hydrogène produit à la cathode.

La résine échangeuse d'anions basique est conforme à la définition qui en a été donnée plus haut. L'enceinte contenant ladite résine peut généralement consister en une colonne verticale, du type de celles généralement utilisées dans les techniques de traitement des eaux.

Dans une forme de réalisation avantageuse de l'installation selon l'invention, la cellule d'électrolyse est couplée à un potentiostat, dont la fonction est de réguler la tension électrique aux bornes de la cellule d'électrolyse, de manière à maintenir dans la solution, pendant son passage dans la cellule d'électrolyse, un potentiel prédéterminé, généralement le potentiel d'oxydo-réduction de la réaction d'oxydation des ions iodure en iode par du chlore.

Dans une autre forme de réalisation de l'installation selon l'invention, qui est préférée, celle-ci comprend, en amont de la chambre de réaction, une chambre destinée à acidifier la solution aqueuse d'halogénure de métal alcalin.

L'invention trouve une application intéressante pour l'épuration des solutions aqueuses de chlorure de sodium destinées à la fabrication du carbonate de sodium par le procédé à l'ammoniaque, ainsi qu'à la production d'hydroxyde de sodium par électrolyse ou électrodialyse.

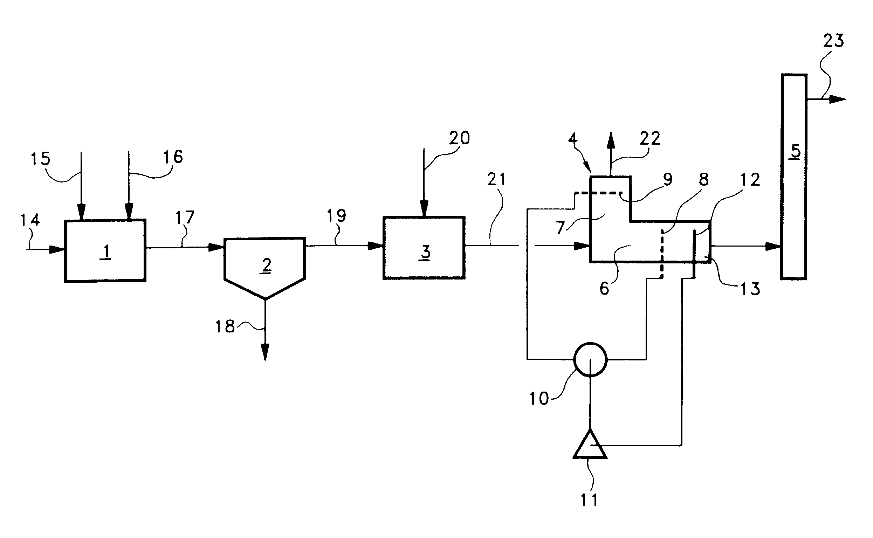

Des particularités et détails de l'invention vont ressortir de la description suivante de la figure unique du dessin annexé, qui représente le schéma d'une forme de réalisation particulière de l'installation selon l'invention.

L'installation schématisée à la figure est destinée à épurer une solution aqueuse de chlorure de sodium contaminée par des composés du calcium et du magnésium ($CaCl_2$, $MgCl_2$) et par des iodures métalliques (iodures de sodium, de calcium et de magnésium).

Elle comprend successivement une chambre de réaction 1, destinée à épurer la solution en calcium et en magnésium, une chambre de décantation 2, une chambre d'acidification 3, une chambre de réaction 4 destinée à l'oxydation des ions iodure de la solution en iode et une colonne 5 remplie de billes d'une résine échangeuse d'anions, dont les sites interchangeables sont saturés avec des anions halogène.

Conformément à l'invention, la chambre de réaction 4 comprend une cellule d'électrolyse. Celle-ci est du type sans diaphragme. Elle présente un profil en L, comprenant une chambre anodique tubulaire horizontale 6 et une chambre cathodique tubulaire verticale 7. La chambre anodique 6 contient une anode 8, constituée d'une plaque verticale, ajourée en titane, portant un revêtement actif d'oxyde de ruthénium et d'oxyde de titane. La chambre cathodique 7 contient une cathode 9, constituée d'une plaque horizontale, ajourée en nickel. L'anode 8 et la cathode 9 sont couplées aux bornes d'une source de courant continu 10. Un potentiostat 11, dont la fonction sera exposée plus loin, est relié à la source de courant 10 et à une électrode auxiliaire 12 située dans un conduit 13 de jonction de la chambre anodique 6 à la colonne de résine 5.

Pendant le fonctionnement de l'installation schématisée à la figure, la solution aqueuse de chlorure de sodium à épurer, désignée par la notation de référence 14, est d'abord épurée en ses ions calcium et magnésium. A cet effet, on la traite dans la chambre de réaction 1 avec du carbonate de sodium 15 et avec de l'hydroxyde de sodium 16, pour précipiter le calcium et le magnésium à l'état de carbonate de calcium et d'hydroxyde de magnésium. On recueille ainsi de la chambre de réaction 1, une suspension aqueuse 17 que l'on transfère dans la chambre de décantation 2. On recueille de la chambre de décantation 2, d'une part, un précipité de carbonate de calcium et d'hydroxyde de magnésium 18 que l'on écarte et, d'autre part, une solution aqueuse de chlorure de sodium 19 que l'on introduit dans la chambre d'acidification 3. Dans celle-ci, la solution aqueuse 19 est additionnée d'une quantité suffisante d'acide chlorhydrique 20 pour amener le pH de la solution à une valeur voisine de 1,5 à 2. La solution acide de chlorure de sodium 21 que l'on recueille de la chambre 3 est éventuellement préchauffée dans un réchauffeur non représenté, puis introduite dans la cellule d'électrolyse 4. La solution aqueuse traverse la chambre anodique 6 de la cellule et passe ensuite dans la colonne de résine 5, via le conduit de jonction 13. La pression hydrostatique du circuit de la solution de chlorure de sodium dans l'installation est réglée de manière que la solution remplisse complètement les deux chambres 6 et 7 de la cellule en immergeant l'anode 8 et la cathode 9. Dans la cellule d'électrolyse 4, la solution est partiellement électrolysée pour produire du chlore qui va immédiatement réagir avec les ions iodure de la solution. De l'hydrogène 22 généré à la cathode 9 traverse celle-ci de bas en haut et s'échappe de la cellule. Il s'est révélé avantageux de soumettre la chambre cathodique 7 à un balayage avec un courant d'air ascendant, pour faciliter l'évacuation de l'hydrogène et éviter de la sorte une réaction explosive avec le chlore produit à l'anode 8. La quantité de chlore générée dans la cellule 4 est réglée par la tension aux bornes de la source de courant 10, de manière à réaliser une oxydation des ions iodure en iode moléculaire, sans formation substantielle d'anions iodate. A cet effet, la source de courant 10 est pilotée par le potentiostat 11 et l'électrode auxiliaire 12, de manière que le potentiel électrochimique de la solution aqueuse dans le conduit 13 se stabilise aux environs de 550 à 600 mV. La solution aqueuse entrant dans la colonne de résine 5 contient ainsi de l'iode moléculaire. Dans la colonne 5, la solution percole à travers la résine et l'iode qu'elle contient est progressivement adsorbé sur la résine. On recueille à la sortie de la colonne 5 une solution aqueuse de chlorure de sodium 23, épurée en calcium, en magnésium et en iode. On peut éventuellement la soumettre à un traitement ultérieur d'épuration en composés ammoniacaux et en composés bromés, au moyen des techniques exposées dans le document EP-A-0399588.

L'exemple dont la description suit sert à illustrer l'invention.

Dans cet exemple, une solution aqueuse, sensiblement saturée en chlorure de sodium (environ 300 g de chlorure de sodium par litre de solution), préalablement épurée en calcium et en magnésium de manière conventionnelle, a été soumise à un procédé conforme à l'invention pour l'épurer en ions iodure. La solution soumise à l'épuration présentait une teneur en ions iodure (considérés à l'état d'iode moléculaire) de 3 mg par litre.

Dans l'installation d'épuration utilisée, on a mis en oeuvre une cellule d'électrolyse du type de celle schématisée à la figure, comprenant, comme anode, une plaque ajourée en titane portant un revêtement d'oxyde de ruthénium et de dioxyde de titane et, pour la cathode, un treillis en nickel. Pour la résine, on a utilisé une résine LEWATIT (BAYER).

La solution aqueuse à épurer a d'abord été acidifiée pour lui conférer une valeur de pH voisine de 2, puis on l'a fait circuler dans l'installation au débit de 0,7 l/h. Dans la solution de chlorure de sodium épurée, recueillie de la colonne de résine, on a mesuré une teneur en iode égale à 0,220 mg/l.

**Revendications**

1. Procédé d'épuration d'une solution aqueuse de chlorure de métal alcalin contenant des ions iodure, selon lequel on oxyde les ions iodure en iode au moyen de chlore actif et on élimine l'iode sur une résine échangeuse d'anions, basique, halogénée, caractérisé en ce qu'on électrolyse la solution pour y générer le chlore actif in situ, dans une cellule d'électrolyse ne comprenant ni diaphragme ni membrane.

2. Procédé selon la revendication 1, caractérisé en ce qu'avant d'électrolyser la solution, on l'acidifie.

3. Procédé selon la revendication 2, caractérisé en ce qu'on acidifie la solution à pH inférieur à 3.

4. Procédé selon la revendication 3, caractérisé en ce qu'on acidifie la solution à pH de 1,5 à 2.

5. Procédé selon l'une quelconque des revendications 1 à 3, caractérisé en ce qu'on règle l'électrolyse de manière à réaliser dans la solution, un potentiel sensiblement égal au potentiel d'oxydo-réduction de la réaction d'oxydation des ions iodure en iode moléculaire par le chlore actif.

6. Procédé selon la revendication 5, caractérisé en ce qu'on règle l'électrolyse de manière à réaliser dans la solution, un potentiel de 550 à 600 mV.

7. Procédé selon l'une quelconque des revendications 1 à 6, caractérisé en ce qu'il est appliqué aux solutions aqueuses de chlorure de sodium.

8. Installation pour l'épuration d'une solution aqueuse de chlorure de métal alcalin contenant des ions iodure, comprenant une chambre de réaction (4) et une enceinte (5) contenant une résine échangeuse d'anions, basique, halogénée, caractérisée en ce que la chambre de réaction (4) comprend une cellule d'électrolyse ne comprenant ni diaphragme ni membrane.

9. Installation selon la revendication 8, caractérisée en ce que la cellule d'électrolyse (4) est couplée à un potentiostat (11).

10. Installation selon la revendication 8 ou 9, caractérisée en ce que la cellule d'électrolyse (4) comprend une chambre cathodique (7), tubulaire, verticale, contenant une cathode poreuse (9) et une chambre anodique (6), tubulaire, horizontale, contenant une anode poreuse (8) et reliée à l'enceinte (5) contenant la résine.

11. Installation selon la revendication 10, caractérisée en ce qu'on soumet la chambre cathodique (7) à un balayage avec un courant d'air ascendant, pour faciliter l'évacuation de l'hydrogène et éviter de la sorte une réaction explosive avec le chlore produit à l'anode (8).

## Claims

1. Process for the purification of an aqueous alkali metal chloride solution containing iodide ions, according to which the iodide ions are oxidized to iodine by means of active chlorine and the iodine is removed on a basic, halogenated, anion exchange resin, characterized in that the solution is electrolysed, in order to generate the active chlorine in situ therein, in an electrolysis cell which comprises neither a diaphragm nor a membrane.

2. Process according to Claim 1, characterized in that, before electrolysing the solution, it is acidified.

3. Process according to Claim 2, characterized in that the solution is acidified to a pH of less than 3.

4. Process according to Claim 3, characterized in that the solution is acidified to a pH of 1.5 to 2.

5. Process according to any one of Claims 1 to 3, characterized in that the electrolysis is adjusted so as to produce, in the solution, a potential substantially equal to the oxidation-reduction potential of the oxidation reaction of the iodide ions to molecular iodine by active chlorine.

6. Process according to Claim 5, characterized in that the electrolysis is adjusted so as to produce, in the solution, a potential of 550 to 600 mV.

7. Process according to any one of Claims 1 to 6, characterized in that it is applied to aqueous sodium chloride solutions.

8. Plant for the purification of an aqueous alkali metal chloride solution containing iodide ions, comprising a reaction chamber (4) and an enclosure (5) containing a basic, halogenated, anion exchange resin, characterized in that the reaction chamber (4) comprises an electrolysis cell which comprises neither a diaphragm nor a membrane.

9. Plant according to Claim 8, characterized in that the electrolysis cell (4) is connected to a potentiostat (11).

10. Plant according to Claim 8 or 9, characterized in that the electrolysis cell (4) comprises a vertical tubular cathodic chamber (7), containing a porous cathode (9), and a horizontal tubular anodic chamber (6) containing a porous anode (8) and connected to the enclosure (5) containing the resin.

11. Plant according to claim 10, characterised in that the cathodic chamber (7) is subjected to purging with a rising stream of air to facilitate discharge of the hydrogen and, in that way, to avoid an explosive reaction with the chorine produced at the anode (8).

## Patentansprüche

1. Verfahren zur Reinigung einer wäßrigen Alkalimetallchloridlösung, die Iodidionen enthält, gemäß dem man die Iodidionen mittels aktivem Chlor zu Iod oxidiert und man das Iod über ein basisches, halogeniertes Anionenaustauscherharz entfernt, dadurch gekennzeichnet, daß man die Lösung in einer weder Diaphragma noch Membran umfassenden Elektrolysezelle elektrolysiert, um dort das aktive Chlor in situ zu erzeugen.

2. Verfahren gemäß Anspruch 1, dadurch gekennzeichnet, daß man die Lösung ansäuert, bevor man sie elektrolysiert.

3. Verfahren gemäß Anspruch 2, dadurch gekennzeichnet, daß man die Lösung auf einen pH-Wert kleiner 3 ansäuert.

4. Verfahren gemäß Anspruch 3, dadurch gekennzeichnet, daß man die Lösung auf einen pH-Wert von 1,5 bis 2 ansäuert.

5. Verfahren gemäß einem der Ansprüche 1 bis 3, dadurch gekennzeichnet, daß man die Elektrolyse so regelt, daß in der Lösung ein Potential realisiert wird, das nahezu gleich dem Redoxpotential der Oxidationsreaktion der Iodidionen zu molekularem Iod durch das aktive Chlor ist.

6. Verfahren gemäß Anspruch 5, dadurch gekennzeichnet, daß man die Elektrolyse so regelt, daß in der Lösung ein Potential von 550 bis 600 mV realisiert wird.

7. Verfahren gemäß einem der Ansprüche 1 bis 6, dadurch gekennzeichnet, daß es auf wäßrige Natriumchloridlösungen angewendet wird.

8. Vorrichtung zur Reinigung einer wäßrigen Alkalimetallchloridlösung, die Iodidionen enthält, die eine Reaktionskammer (4) und einen Raum (5), der ein basisches, halogeniertes Anionenaustauscherharz enthält, umfaßt, dadurch gekennzeichnet, daß die Reaktionskammer (4) eine weder Diaphragma noch Membran umfassende Elektrolysezelle umfaßt.

9. Vorrichtung gemäß Anspruch 8, dadurch gekennzeichnet, daß die Elektrolysezelle (4) an einen Potentiostat (11) gekoppelt ist.

10. Vorrichtung gemäß Anspruch 8 oder 9, dadurch gekennzeichnet, daß die Elektrolysezelle (4) eine röhrenförmige, senkrechte kathodische Kammer (7), die eine poröse Kathode (9) enthält, und eine röhrenförmige, waagrechte anodische Kammer (6), die eine poröse Anode (8) enthält und mit dem Raum (5), der das Harz enthält, verbunden ist, umfaßt.

11. Vorrichtung gemäß Anspruch 10, dadurch gekennzeichnet, daß man die kathodische Kammer (7) mit einem aufsteigenden Luftstrom spült, um das Abführen des Wasserstoffs zu erleichtern und so eine Explosionsreaktion mit dem an der Anode (8) erzeugten Chlor zu vermeiden.

7